(19) **Europäisches Patentamt / European Patent Office / Office européen des brevets**

(11) **EP 3 018 150 B1**

(12) **EUROPEAN PATENT SPECIFICATION**

(45) Date of publication and mention of the grant of the patent:
**11.03.2020 Bulletin 2020/11**

(51) Int Cl.:
**C08F 4/654** *(2006.01)*     **C08F 110/06** *(2006.01)*

(21) Application number: **15192517.9**

(22) Date of filing: **02.11.2015**

(54) **PROCESS FOR THE PREPARATION OF SPHERICAL CATALYST PARTICLES**

VERFAHREN ZUR HERSTELLUNG VON SPHÄRISCHEN KATALYSATOR-PARTIKELN

PROCÉDÉ DE PRÉPARATION DE PARTICULES DE CATALYSEUR SPHÉRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.11.2014 IN 3512MUN2014**

(43) Date of publication of application:
**11.05.2016 Bulletin 2016/19**

(73) Proprietor: **Indian Oil Corporation Limited
400 051 Mumbai (IN)**

(72) Inventors:
- **SINGH, Gurmeet**
  **121007 Haryana (IN)**
- **KAUR, Sukhdeep**
  **121007 Haryana (IN)**
- **BANTU, Bhasker**
  **121007 Haryana (IN)**
- **KUMAR, Naresh**
  **121007 Haryana (IN)**
- **KANT, Shashi**
  **121007 Haryana (IN)**
- **KAPUR, Gurpreet Singh**
  **121007 Haryana (IN)**
- **BASU, Biswajit**
  **121007 Haryana (IN)**
- **MALHOTRA, Ravinder Kumar**
  **121007 Haryana (IN)**

(74) Representative: **AWA Denmark A/S
Strandgade 56
1401 Copenhagen K (DK)**

(56) References cited:
**EP-A1- 1 609 805**     **EP-A1- 2 966 099**
**WO-A2-2014/045258**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## FIELD OF THE INVENTION

The present invention discloses a process for preparation of catalyst composition in a controlled manner so as to have spherical particles and methods of making polyolefins there from. The disclosed catalyst composition which is largely spherical has transition metal compound, organomagnesium precursor and internal donor. The catalyst composition has narrow particle size distribution and is capable of producing polyolefins in free flowing particles having bulk densities of 0.4 g/cm3.

## BACKGROUND OF THE INVENTION

Polyolefins are the largest commodity polymer group and are made by polymerizing olefins using Ziegler-Natta catalyst systems. These ZN catalysts are in general consists of a support which mostly is magnesium based onto which titanium component has been added along with organic compound known as internal donor. This catalyst when combined with co-catalyst and/or external donor comprise of the complete ZN catalyst system.

It is well known that particle size distribution of the catalyst have an important influence on the properties of the polymer produced using the catalyst especially at commercial scale. The desirable catalyst particle shape and a narrow particle size distribution of a catalyst is an attribute that all catalyst manufacturers look for. Also since the morphology of the precursor gets translated to the catalyst and hence to the polymer, it becomes essential to have free flowing catalyst as well as polymer powder in order to have trouble free commercial production.

Spherical catalyst synthesis is well known in Ziegler-Natta chemistry. General approach for producing spherical catalysts is through making the precursor or the support spherical in nature. To obtain spherical support with finely controlled morphology, different methods developed are controlled precipitation, spray-drying or cooling, use of solid supports such as silica to support $MgCl_2$, rapid cooling or quenching of an emulsion of $MgCl_2.nROH$ in oil. The processes like spray drying process, spray cooling process, high-pressure extruding process, high-speed stirring process, etc. are extensively used where magnesium halide/alcohol adducts are used as precursors as described in WO198707620,WO199311166, US5,100,849, US5,468,698, US6,020,279, US4,469,648 and US6,323,152. Other approaches like recrystallization and reprecipitation are used when dialkoxymagnesium is used as for support as described in US 5,162,277, US 5,955,396, US 20090233793. Spheriodical silica is also used to anchor magnesium component and hence resulting in formation of spherical catalyst as described US 5,610,246, EP1609805, US 5,034,365, US 5,895,770 US 6,642,325.

However, there is a need of a simple and economical process for preparing spherical particles of a catalyst composition.

## SUMMARY OF THE INVENTION

Accordingly the present invention provides a process for preparing spherical particles of a catalyst composition, the process comprising:

contacting an organomagnesium precursor with a transition metal compound in presence of an internal donor to obtain a reaction mixture;
heating the reaction mixture from a first pre-determined temperature to a second pre-determined temperature and thereafter heating the reaction mixture from second pre-determined temperature to a third pre-determined temperature to obtain spherical particles of the catalyst composition,
wherein heating the reaction mixture from the first pre-determined temperature to the second pre-determined temperature is instigated for a fixed period of time in the range of 5 to 200 minutes at a rate of 0.01 to 10.0°C/minute.

In one embodiment of the present invention, the heating is instigated for a fixed period of time at a rate of 0.1 to 5.0°C/minute.

In another embodiment of the present invention, the first pre-determined temperature is the temperature of the reaction mixture and is in the range of about -50°C to about 50°C, or about - 30°C to about 30°C.

In yet another embodiment of the present invention, the second pre-determined temperature is in the range of 20 to 40°C.

In still an embodiment of the present invention, the third pre-determined temperature is in the range of 100 to 120°C.

In yet another embodiment of the present invention, molar ratio of the organomagnesium precursor: transition metal compound : internal donor is used in the range of 1: 1-200: 0.01 - 0.05.

The heating of the reaction mixture from the first pre-determined temperature to the second pre-determined temperature is done at an agitation/stirring speed of about 100 to about 1000 rpm.

In yet another embodiment of the present invention, the agitation/stirring speed is in the range of about 200 rpm to about 800 rpm.

In yet another embodiment of the present invention, the size of the spherical catalyst particles is in the range of 10 to 40 $\mu$m.

In yet another embodiment of the present invention, the internal electron donor used is selected from a group comprising of phthalates, benzoates, succinates, malonates, carbonates, diethers, and combinations thereof, wherein:

(a) the phthalate is selected from a group comprising of di-n-butyl phthalate, di-i-butyl phthalate, di-2-ethylhexyl phthalate, di-n-octyl phthalate, di-i-octyl phthalate, di-n-nonyl phthalate;

(b) the benzoate is selected from a group comprising of methyl benzoate, ethyl benzoate, propyl benzoate, phenyl benzoate, cyclohexyl benzoate, methyl toluate, ethyl toluate, p-ethoxy ethyl benzoate, p-isopropoxy ethyl benzoate;

(c) the succinate is selected from a group comprising of diethyl succinate, di-propyl succinate, diisopropyl succinate, dibutyl succinate, diisobutyl succinate;

(d) the malonate is selected from a group comprising of diethyl malonate, diethyl ethylmalonate, diethyl propyl malonate, diethyl isopropylmalonate, diethyl butylmalonate;

(e) the carbonate compound is selected from a group comprising of diethyl 1,2-cyclohexanedicarboxylate, di-2-ethylhexyl 1,2-cyclohexanedicarboxylate, di-2-isononyl 1,2-cyclohexanedicarboxylate, methyl anisate, ethyl anisate; and

(f) the diether compound is selected from a group comprising of 9,9-bis(methoxymethyl)fluorene, 2-isopropyl-2-isopentyl-1,3-dimethoxypropane, 2,2-diisobutyl-1,3-dimethoxypropane, 2,2-diisopentyl-1,3- dimethoxypropane, 2-isopropyl-2-cyclohexyl- 1,3-dimethoxypropane.

In yet another embodiment of the present invention, the transition metal compound represented by $M(OR)_pX_{4-p}$, where M is selected from a group comprising of Ti, V, Zr and Hf; X is a halogen atom; R is a hydrocarbon group and p is an integer having value equal or less than 4, the transition metal compound is selected from a group comprising of transition metal tetrahalide, alkoxy transition metal trihalide/aryloxy transition metal trihalide, dialkoxy transition metal dihalide, trialkoxy transition metal monohalide, tetraalkoxy transition metal, and mixtures thereof, wherein:

(a) the transition metal tetrahalide is selected from a group comprising of titanium tetrachloride, titanium tetrabromide and titanium tetraiodide for V, Zr and Hf;

(b) alkoxy transition metal trihalide/aryloxy transition metal trihalide is selected from a group comprising of methoxytitanium trichloride, ethoxytitanium trichloride, butoxytitanium trichloride and phenoxytitanium trichloride for V, Zr and Hf;

(c) dialkoxy transition metal dihalide is diethoxy transition metal dichloride for V, Zr and Hf;

(d) trialkoxy transition metal monohalide is triethoxy transition metal chloride for V, Zr and Hf; and

(e) tetraalkoxy transition metal is selected from a group comprising of tetrabutoxy titanium and tetraethoxy titanium for V, Zr and Hf.

In yet another embodiment of the present invention, the transition metal compound is titanium compound represented by $Ti(OR)_pX_{4-p}$, where X is a halogen atom; R is a hydrocarbon group and p is an integer having value equal or less than 4.

When the organomagnesium precursor is liquid in nature it is prepared by contacting magnesium source with organohalide and alcohol in presence of a solvent in a single step.

When the organomagnesium precursor is solid in nature it is prepared by first contacting the magnesium source with organohalide in presence of solvating agent as the first step and then followed by addition of alcohol.

In yet another embodiment of the present invention, the organomagnesium precursor is spray dried organomagnesium precursor having spherical morphology and is prepared by first contacting the magnesium source with organohalide in presence of solvating agent as the first step and then followed by addition of alcohol and then subjected to spray dried to obtain spherical morphology of the organomagnesium precursor.

In still an embodiment of the present invention, the solvating agent is selected from a group comprising of dimethyl ether, diethyl ether, dipropyl ether, diisopropyl ether, ethylmethyl ether, n-butylmethyl ether, n-butylethyl ether, di-n-butyl ether, di-isobutyl ether, isobutylmethyl ether, and isobutylethyl ether, dioxane, tetrahydrofuran, 2-methyl tetrahydrofuran, tetrahydropyran and combination thereof.

In yet another embodiment of the present invention, the magnesium source is selected from a group comprising of magnesium metal, dialkyl magnesium, alkyl/aryl magnesium halides and mixtures thereof; wherein:

(a) the magnesium metal is in form of powder, ribbon, turnings, wire, granules, block, lumps, chips;

(b) the dialkylmagnesium compounds is selected from a group comprising of dimethylmagnesium, diethylmagnesium, diisopropylmagnesium, dibutylmagnesium, dihexylmagnesium, dioctylmagnesium, ethylbutylmagnesium, and butyloctylmagnesium; and

(c) alkyl/aryl magnesium halides is selected from a group comprising of methylmagnesium chloride, ethylmagnesium chloride, isopropylmagnesium chloride, isobutylmagnesium chloride, tert-butylmagnesium chloride, benzylmagnesium chloride, methylmagnesium bromide, ethylmagnesium bromide, isopropylmagnesium bromide, isobutylmagnesium bromide, tert-butylmagnesium bromide, hexylmagnesium bromide, benzylmagnesium bromide, methylmagnesium iodide, ethylmagnesium iodide, isopropylmagnesium iodide, isobutylmagnesium iodide, tert-butylmagnesium iodide, and benzylmagnesium iodide.

In yet another embodiment of the present invention, the organohalide is selected from a group comprising of alkyl halides either branched or linear, halogenated alkyl benzene/benzylic halides having an alkyl radical contains from about 10 to 15 carbon atoms and mixtures thereof; wherein:

(a) the alkyl halides is selected from a group comprising of methyl chloride, ethyl chloride, propyl chloride, isopropyl chloride, dichloromethane, chloroform, carbon tetrachloride, 1,1-dichloropropane, 1,2-dichloropropane, 1,3-dichloropropane, 2,3-dichloropropane, n-butyl chloride, iso-butyl chloride, 1,4-dichlorobutane, tert-butylchloride, amylchloride, tert-amylchloride, 2-chloropentane, 3-chloropentane, 1,5-dichloropentane, 1-chloro-8-iodoctane, 1-chloro-6-cyanohexane, cyclopentylchloride, cyclohexylchloride, chlorinated dodecane, chlorinated tetradecane, chlorinated eicosane, chlorinated pentacosane, chlorinated triacontane, iso-octylchloride, 5-chloro-5-methyl decane, 9-chloro-9-ethyl-6-methyl eiscosane; and

(b) the halogenated alkyl benzene/benzylic halides is selected from a group comprising of benzyl chloride and $\alpha,\alpha'$ dichloro xylene.

In yet another embodiment of the present invention, the alcohol is selected from a group comprising of aliphatic alcohols, alicyclic alcohols, aromatic alcohols, aliphatic alcohols containing an alkoxy group, diols and mixture thereof; wherein:

(a) the aliphatic alcohols is selected from a group comprising of methanol, ethanol, propanol, n-butanol, iso-butanol, t-butanol, n-pentanol, iso-pentanol, n-hexanol, 2-methylpentanol, 2-ethylbutanol, n-heptanol, n-octanol, 2-ethylhexanol, decanol and dodecanol,

(b) the alicyclic alcohols is selected from a group comprising of cyclohexanol and methylcyclohexanol,

(c) the aromatic alcohols is selected from a group comprising of benzyl alcohol and methylbenzyl alcohol,

(d) the aliphatic alcohols containing an alkoxy group is selected from a group comprising of ethyl glycol and butyl glycol;

(e) the diols is selected from a group comprising of catechol, ethylene glycol, 1,3-propanediol, 1,4-butanediol, 1,5-pentanediol, 1,8-octanediol, 1,2-propanediol, 1,2-butanediol, 2,3-butanediol, 1,3-butanediol, 1,2-pentanediol, p-menthane-3,8-diol, and 2-methyl-2,4-pentanediol.

In yet another embodiment of the present invention, the spherical catalyst composition comprises a combination of 2.0 wt % to 20 wt % of an internal electron donor, 0.5 wt % to 10.0 wt% of a transition metal and 10 wt% to 20 wt % of a magnesium.

The present invention also provides a process for preparation of a spherical catalyst system, said process comprising contacting the spherical catalyst composition with at least one cocatalyst, and at least one external electron donor to obtain the spherical catalyst system.

## BRIEF DESCRIPTION OF DRAWINGS

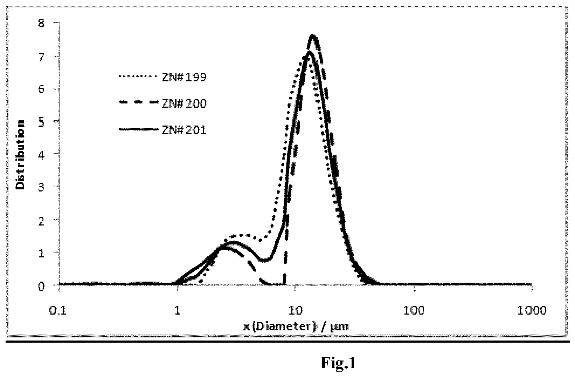

**Fig. 1** - Describes the particle size distribution of the catalyst obtained by using spray dried precursor.

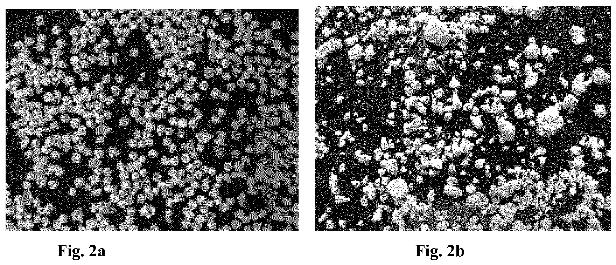

**Fig. 2** - Depicts the morphology of the polymer a) using the catalyst as claimed b) using catalyst outside the claimed process.

## DETAILED DESCRIPTION OF THE INVENTION

The present invention relates to the process for preparation of catalyst composition in a controlled manner so as to have spherical particles and methods of making polyolefins therefrom. The disclosed catalyst composition contains titanium component, precursor and internal donor. The titanium component used here can be solid titanium component. The disclosed process for preparation of catalyst composition involves process modification in controlled manner leading to generation of largely spherical catalyst particles. The generated spherical catalyst particles were able to polymerize olefins. The resulted polymer was found to be spherical in nature and were free flowing particles having bulk densities of 0.4 g/cm$^3$.

The present invention discloses a process for preparation of catalyst composition which has led to the generation of spherical particles of the catalyst and hence the polymer without using any external or specialized technique; employing the organomagnesium precursor, which is prepared through the process as disclosed in Indian patent applications filed as 2649/MUM/2012 and 2765/MUM/2012.

According to the present invention, the precursor contains organomagnesium compound and may be liquid or solid in nature. In an embodiment, the organomagnesium precursor is liquid in nature and hence called "liquid precursor" and is prepared by contacting magnesium source with organohalide and alcohol in presence of the solvent in a single step. In another embodiment, liquid precursor is a complex represented by $\{Mg(OR')X\}.a\{MgX_2\}.b\{Mg(OR')_2\}.c\{R'OH\}$, wherein R' is selected from a hydrocarbon group, X is selected from a halide group, and a:b:c is in range of 0.1-99.8 : 0.1 - 99.8 : 0.1 - 99.8.

In another embodiment, the organomagnesium precursor is solid in nature and hence called "solid precursor" and is prepared by first contacting the magnesium source with organohalide in presence of solvating agent as the first step and then followed by addition of alcohol. The solid organomagnesium precursor is obtained either by removal of solvent or by precipitation methodology. In another embodiment, solid magnesium based precursor is a complex represented by $\{Mg(OR')X\}.a\{MgX_2\}.b\{Mg(OR')_2\}.c\{R'OH\}$, wherein R' is selected from a hydrocarbon group, X is selected from a halide group, and a:b:c is in range of 0.01-0.5 : 0.01 - 0.5 : 0.01-5.

An aspect of the present invention discloses that the precursor can be spray dried and hence the catalyst system generated using spray dried precursor is spherical in nature and is capable of producing polyolefins in free flowing particles having bulk densities of 0.4 g/cm3. Another aspect of the present invention discloses that spherical particles of the catalysts are generated performing the catalyst synthesis process in controlled manner wherein the control is over temperature and agitation during catalyst synthesis.

The present invention relates to the process for preparation of catalyst composition in a controlled manner so as to have spherical particles and methods of making polyolefins therefrom. In an embodiment, the process involves contacting precursor made from magnesium with titanium component in presence of internal donor. Here the inventors found that after contacting titanium component and magnesium component with internal donor, the reaction mixture when subjected to temperature ramping resulted in providing catalyst particles which are spherical in nature. Whereas if the catalyst synthesis is carried out without any temperature ramping, the resultant morphology of the catalyst as well the polymer was found to be regular.

In an embodiment, the starting temperature of temperature ramp where starting temperature is the temperature of the reaction mixture containing titanium, magnesium and internal donor, is - 50°C to about 50°C, and more preferably about -30°C to about 20°C. In another embodiment, the final temperature in temperature ramping is preferably about 0°C and about 140°C, more preferably about 10°C and about 120°C. The fixed time is heating instigated at a rate of 0.01 to 10.0°C/minute, more preferably at a rate of 0.1 to 5.0°C/minute.

In another aspect of the present invention, inventors also found that the agitation of the reaction mixture also plays an important role in controlling the catalyst morphology wherein the catalyst morphology includes catalyst particle shape, particle size, particle size distribution and bulk density. It was found that, at a particular set condition of temperature ramping, as the agitation (represented by the rotation per minute (RPM) of the agitator) is increased, the particle size of the catalyst decreases.

In an embodiment, the agitation/stirring speed is about 100 to about 1000 rpm, more preferably from 200 rpm to about 800 rpm.

In another embodiment, the catalyst particles were spherical in nature with average particle size (D50$\mu$m) of about 5 to 40, preferably 10 to 30.

In an embodiment, the invention provides the method of synthesis of olefin polymerizing catalyst, comprising of reacting the organomagnesium precursor with liquid titanium compound which includes tetravalent titanium compound represented as $Ti(OR)_pX_{4-p}$ where X can be halogen selected from Cl or Br, R is a hydrocarbon group and p is an integer varying from 0-4. Specific examples of the titanium compound include titanium tetrahalides such as titanium tetrachloride, titanium tetrabromide, titanium tetraiodide; alkoxytitanium trihalide such as methoxytitanium trichloride, ethoxytitanium trichloride, butoxytitanium trichloride, phenoxytitanium trichloride; dialkoxy titanium dihalides such as diethoxy titanium dichloride; trialkoxytitanium monohalide such as triethoxy titanium chloride; and tetraalkoxytitanium such as tetrabutoxy titanium, tetraethoxy titanium, and mixtures thereof, with titanium tetrachloride being preferred. These titanium compounds may be used alone or in the form of mixture thereof.

In another embodiment, the contact of organomagnesium precursor with titanium compound can be either neat or in solvent which can be chlorinated or non chlorinated aromatic or aliphatic in nature examples being benzene, decane, kerosene, ethyl benzene, chlorobenzene, dichlorobenzene, toluene, o-chlorotoluene, xylene, dichloromethane, chloroform, and cyclohexane comprising from 40 to 60 volume percent. In another embodiment, the solid organomagnesium precursor can be used as solid or in solvent which can be chlorinated or non chlorinated aromatic or aliphatic in nature examples being benzene, decane, kerosene, ethyl benzene, chlorobenzene, dichlorobenzene, toluene, o-chlorotoluene, xylene, dichloromethane, chloroform, and cyclohexane comprising from 40 to 60 volume percent.

In an embodiment, either the titanium compound is added to the precursor or vice-verse, preferably, precursor is added to titanium compound. In another embodiment, this addition is either one shot or dropwise. In another embodiment, the contact temperature of precursor and titanium compound is preferably between about -40°C and about 150°C, and more preferably between about -30°C and about 120°C.

In an embodiment, the titanium compound is added in amounts ranging from usually about at least 1 to 200 moles, preferably, 3 to 200 moles and more preferably, 5 moles to 100 moles, with respect to one mole of magnesium.

In an embodiment, internal electron donor is selected from phthalates, benzoates, diethers, succinates, malonates, carbonates, silyl esters, amide esters, ether esters, amide ethers, silyl ethers, silyl ether esters and combinations thereof. Specific examples include di-n-butyl phthalate, di-i-butyl phthalate, di-2-ethylhexyl phthalate, di-n-octyl phthalate, di-i octyl phthalate, di-n-nonyl phthalate, methyl benzoate, ethyl benzoate, propyl benzoate, phenyl benzoate, cyclohexyl benzoate, methyl toluate, ethyl toluate, p-ethoxy ethyl benzoate, p-isopropoxy ethyl benzoate, diethyl succinate, di-propyl succinate, diisopropyl succinate, dibutyl succinate, diisobutyl succinate, diethyl malonate, diethyl ethylmalonate, diethyl propyl malonate, diethyl isopropylmalonate, diethyl butylmalonate, diethyl 1,2-cyclohexanedicarboxylate, di-2-ethylhexyl 1,2-cyclohexanedicarboxylate, di-2- isononyl 1,2-cyclohexanedicarboxylate, methyl anisate, ethyl anisate and diether compounds such as 9,9-bis(methoxymethyl)fluorene, 2-isopropyl-2-isopentyl-1,3-dimethoxypropane, 2,2-diisobutyl-1,3-dimethoxypropane, 2,2-diisopentyl-1,3-dimethoxypropane, 2-isopropyl-2-cyclohexyl-1,3-dimethoxypropane, preferably di-n-butyl phthalate.

In another embodiment, the internal electron donor is used in an amount of from 0.001 to 1 moles, preferably from 0.01 to 0.5 moles, with respect to one mole of magnesium.

In an embodiment, the addition of internal donor is either to the precursor or to the titanium component, preferably to precursor. The contact temperature of internal donor depends upon to which component it is being added. In an embodiment, the contact time of the desired component with the internal electron donor is at least 10 minutes to 60 minutes at contact temperature of preferably between about -50°C and about 100°C, and more preferably between about -30°C and about 90°C. In another embodiment, the internal donor may be added in single step or in multiple steps.

The procedure of contacting the titanium component may be repeated one, two, three or more times as desired. In an embodiment, the resulting solid material recovered from the mixture can be contacted one or more times with the mixture of liquid titanium component in solvent for at least 10 minutes up to 60 minutes, at temperature from about 25°C to about 150°C, preferably from about 30°C to about 110°C.

The resulting solid composition comprising of magnesium, titanium, halogen, alcohol and the internal electron donor can be separated from the reaction mixture either by filtration or decantation and finally washed with inert solvent to remove unreacted titanium component and other side products. Usually, the resultant solid material is washed one or more times with inert solvent which is typically a hydrocarbon including aliphatic hydrocarbon like isopentane, isooctane, hexane, pentane or isohexane. In an embodiment, the resulting solid mixture is washed one or more times with inert hydrocarbon based solvent preferably, hexane at temperature from about 20°C to about 80°C, preferably from about 25°C to about 70°C. The solid catalyst then can be separated and dried or slurried in a hydrocarbon specifically heavy hydrocarbon such as mineral oil for further storage or use.

In an embodiment, the catalyst composition includes from about 5.0 wt % to 20 wt % of internal electron donor, titanium is from about 1.0 wt % to 6.0 wt% and magnesium is from about 15 wt% to 20 wt %.

In an embodiment, the magnesium component used in the precursor includes for example magnesium metal in form of powder, granules, ribbon, turnings, wire, blocks, lumps, chips; dialkylmagnesium compounds such as dimethylmagnesium, diethylmagnesium, diisopropylmagnesium, dibutylmagnesium, dihexylmagnesium, dioctylmagnesium, ethylbutylmagnesium, and butyloctylmagnesium; alkylmagnesium halides such as methylmagnesium chloride, ethylmagnesium chloride, isopropylmagnesium chloride, isobutylmagnesium chloride, tert-butylmagnesium chloride, methylmagnesium bromide, ethylmagnesium bromide, isopropylmagnesium bromide, isobutylmagnesium bromide, tert-butylmagnesium bromide, hexylmagnesium bromide, methylmagnesium iodide, ethylmagnesium iodide, isopropylmagnesium iodide, isobutylmagnesium iodide, and tert-butylmagnesium iodide; benzylmagnesium halides such as benzylmagnesium chloride, benzylmagnesium bromide and benzylmagnesium iodide. These magnesium compounds may be in the liquid or solid state. The magnesium compound is preferably magnesium metal.

In another embodiment, the organohalide which is contacted with magnesium compound, includes for example alkyl halides such as methyl chloride, ethyl chloride, propyl chloride, isopropyl chloride, 1,1-dichloropropane, 1,2-dichloropropane, 1,3-dichloropropane, 2,3-dichloropropane, butyl chloride, 1,4-dichlorobutane, tert-butylchloride, amylchloride, tert-amylchloride, 2-chloropentane, 3-chloropentane, 1,5-dichloropentane, 1-chloro-8-iodoctane, 1-chloro-6-cyanohexane, cyclopentylchloride, cyclohexylchloride, chlorinated dodecane, chlorinated tetradecane, chlorinated eicosane, chlorinated pentacosane, chlorinated triacontane, iso-octylchloride, 5-chloro-5-methyl decane, 9-chloro-9-ethyl-6-methyl eiscosane; benzylic halides, such as benzyl chloride and $\alpha,\alpha'$ dichloro xylene; chlorinated alkyl benzene wherein the alkyl radical contains from about 10 to 15 carbon atoms, as well as the corresponding bromine, fluorine and iodine substituted hydrocarbons. These organohalides may be used alone or in the form of mixture thereof. The organohalides is preferably benzyl chloride or butyl chloride.

In an embodiment, the solvating agent includes for example dimethyl ether, diethyl ether, dipropyl ether, diisopropyl ether, ethylmethyl ether, n-butylmethyl ether, n-butylethyl ether, di-n-butyl ether, di-isobutyl ether, isobutylmethyl ether, and isobutylethyl ether. Also polar solvents, including dioxane, tetrahydrofuran, 2-methyl tetrahydrofuran, tetrahydropyran, chlorobenzene, and dichloromethane. Also non-polar solvents like toluene, heptane, and hexane. These solvating agents may be used alone or in the form of mixture thereof. The preferred solvating agent is diethyl ether, tetrahydrofuran or toluene.

In an embodiment, the alcohol contacted includes for example, aliphatic alcohols such as methanol, ethanol, propanol, butanol, iso-butanol, t-butanol, n-pentanol, iso-pentanol, hexanol , 2-methylpentanol, 2-ethylbutanol, n-heptanol, n-octanol, 2-ethylhexanol, decanol and dodecanol, alicyclic alcohols such as cyclohexanol and methylcyclohexanol, aromatic alcohols such as benzyl alcohol and methylbenzyl alcohol, aliphatic alcohols containing an alkoxy group, such as ethyl glycol, butyl glycol; diols such as catechol, ethylene glycol, 1,3-propanediol, 1,4-butanediol, 1,5-pentanediol, 1,8-octanediol, 1,2-propanediol, 1,2-butanediol, 2,3-butanediol 1,3-butanediol, 1,2-pentanediol, p-menthane-3,8-diol, 2-methyl-2,4-pentanediol. These alcohols may be used alone or in the form of mixture thereof. The preferred alcohol is 2-ethyl-1-hexanol.

According to the preferred embodiment, the magnesium compound is reacted with the said organohalide in a molar ratio of between 1:20 to 1:0.2, preferably between about 1:10 to 1:0.5, more preferably, between 1:4 to 1:0.5. In another embodiment, the magnesium compound and solvent are taken as molar ratio of between 1:20 to 1:0.2, preferably between about 1:15 to 1:1, more preferably, between 1:10 to 1:1. Another embodiment of the present invention, the magnesium compound, organohalide, solvating agent and alcohol are contacted at temperature preferably between about -20°C and about 200°C, and preferably between about -10°C and about 140°C, more preferably between -10°C to 100°C. Usually, the contact time is for about 0.5 to 12 h.

In an embodiment, reaction promoters like iodine, organohalides, inorganic halides such as CuCl, MnCl$_2$, AgCl, nitrogen halides like N-halide succinimides, trihaloisocynauric acid compounds, N-halophthalimide and hydrantoin compounds can be used.

According to the preferred embodiment, the magnesium compound along with organohalide is reacted with the said alcohol in a molar ratio of between 1:20 to 1:0.2, preferably between about 1:10 to 1:0.5, more preferably, between 1:4 to 1:0.5. In an embodiment, the addition of organohalide, solvating agent and alcohol can be one shot, dropwise and/or controlled.

In case of single pot synthesis of organomagnesium compound where magnesium compound along with organohalide, solvating agent and alcohol are reacted all together, the resulting solution is directly used for catalyst synthesis without further purification.

In case of solid precursor synthesis, in an embodiment, the resulting organomagnesium compound can be isolated either using reduced pressure with and/or without heating, through precipitation, recrystallization or used as such for making olefin polymerization catalyst system without any further purification.

An aspect of the present invention discloses that the novel precursor can be spray dried and hence the catalyst synthesized using spray dried precursor is spherical in nature and capable of producing polyolefins in free flowing particles having bulk densities of 0.4 g/cm$^3$.

The present invention provides the catalyst system for polymerization of olefins. In the embodiment, the method of polymerization process is provided where the catalyst system is contacted with olefin under polymerization conditions. The catalyst system includes catalyst composition, organoaluminum compounds and external electron donors. The catalyst composition includes combination of magnesium moiety, titanium moiety and an internal donor. The magnesium moiety includes the organomagnesium compound.

The present invention provides the method of polymerizing and/or copolymerizing olefins. In the embodiment, the method of polymerization process is provided where the catalyst system is contacted with olefin under polymerization conditions. The catalyst system includes catalyst composition, cocatalyst and external electron donors. The catalyst composition includes combination of magnesium moiety, titanium moiety and an internal donor. The magnesium moiety includes the stable solid organomagnesium compound. The cocatalyst may include hydrides, organoaluminum, lithium, zinc, tin, cadmium, beryllium, magnesium, and combinations thereof. In an embodiment, the cocatalyst is organoaluminum compounds.

The present invention provides the method of polymerizing and/or copolymerizing olefins. In the embodiment, the method of polymerization process is provided where the catalyst system is contacted with olefin under polymerization conditions. The catalyst system includes catalyst composition, organoaluminum compounds and external electron donors. The catalyst composition includes combination of magnesium moiety, titanium moiety and an internal donor.

The magnesium moiety includes the stable solid organomagnesium compound. The olefins includes from C2-C20. The ratio of titanium (from catalyst composition): aluminum (from organoaluminum compound): external donor can be from 1: 5-1000:0-250, preferably in the range from 1:25-500:25-100.

The present invention provides the catalyst system. The catalyst system includes catalyst composition, organoaluminum compounds and external electron donors. In an embodiment, the organoaluminum compounds include alkylaluminums such as trialkylaluminum such as preferably triethylaluminum, triisopropylaluminum, triisobutylaluminum, tri-n-butylaluminum, tri-n- hexylaluminum, tri-n-octylaluminum; trialkenylaluminums such as triisoprenyl aluminum; dialkylaluminum halides such as diethylaluminum chloride, dibutylaluminum chloride, diisobutylaluminum chloride and diethyl aluminum bromide; alkylaluminum sesquihalides such as ethylaluminum sesquichloride, butylaluminum sesquichloride and ethylaluminum sesquibromide; dialkylaluminum hydrides such as diethylaluminum hydride and dibutylaluminum hydride; partially hydrogenated alkylaluminum such as ethylaluminum dihydride and propylaluminum dihydride and aluminoxane such as methylaluminoxane, isobutylaluminoxane, tetraethylaluminoxane and tetraisobutylaluminoxane; diethylaluminum ethoxide.

The mole ratio of aluminum to titanium is from about 5:1 to about 1000:1 or from about 10:1 to about 700:1, or from about 25:1 to about 500:1.

The present invention provides the catalyst system. The catalyst system includes catalystcomposition, organoaluminum compounds and external electron donors. The external electron donors are organosilicon compounds, diethers and alkoxy benzoates. The external electron donor for olefin polymerization when added to the catalytic system as a part of cocatalyst retains the stereospecificity of the active sites, convert non-stereospecific sites to stereospecific sites, poisons the non-stereospecific sites and also controls the molecular weight distributions while retaining high performance with respect to catalytic activity. The external electron donors which are generally organosilicon compounds include trimethylmethoxysilane, trimethylethoxysilane, dimethyldimethoxysilane, dimethyldiethoxysilane, diisopropyldimethoxysilane, diisobutyldimethoxysilane, t-butylmethyldimethoxysilane, t-butylmethyldiethoxysilane, t-amylmethyldiethoxysilane, dicyclopentyldimethoxysilane, diphenyldimethoxysilane, phenylmethyldimethoxysilane, diphenyldiethoxysilane, bis-o-tolydimethoxysilane, bis-m-tolydimethoxysilane, bis-p-tolydimethoxysilane, bis-p-tolydiethoxysilane, bisethylphenyldimethoxysilane, dicyclohexyldimethoxysilane, cyclohexylmethyldimethoxysilane, cyclohexylmethyldiethoxysilane, ethyltrimethoxysilane, ethyltriethoxysilane, vinyltrimethoxysilane, methyltrimethoxysilane, n-propyltriethoxysilane, decyltrimethoxysilane, decyltriethoxysilane, phenyltrimethoxysilane, gamma-chloropropyltrimethoxysilane, methyltriethoxysilane, ethyltriethoxysilane, vinyltriethoxysilane, t-butyltriethoxysilane, n-butyltriethoxysilane, isobutyltriethoxysilane, phenyltriethoxysilane, gammaaminopropyltriethoxysilane, cholotriethoxysilane, ethyltriisopropoxysilane, vinyltirbutoxysilane, cyclohexyltrimethoxysilane, cyclohexyltriethoxysilane, 2-norbornanetrimethoxysilane, 2-norbornanetriethoxysilane, 2-norbornanemethyldimethoxysilane, ethyl silicate, butyl silicate, trimethylphenoxysilane, and methyltriallyloxysilane, cyclopropyltrimethoxysilane, cyclobutyltrimethoxysilane, cyclopentyltrimethoxysilane, 2-methylcyclopentyltrimethoxysilane, 2,3-dimethylcyclopentyltrimethoxysilane, 2,5-dimethylcyclopentyltrimethoxysilane, cyclopentyltriethoxysilane, cyclopentenyltrimethoxysilane, 3-cyclopentenyltrimethoxysilane, 2,4-cyclopentadienyltrimethoxysilane, indenyltrimethoxysilane and fluorenyltrimethoxysilane; dialkoxysilanes such as dicyclopentyldimethoxysilane, bis(2-methylcyclopentyl)dimethoxysilane, bis(3-tertiary butylcyclopentyl)dimethoxysilane, bis(2,3-dimethylcyclopentyl)dimethoxysilane, bis(2,5-dimethylcyclopentyl)dimethoxysilane, dicyclopentyldiethoxysilane, dicyclobutyldiethoxysilane, cyclopropylcyclobutyldiethoxysilane, dicyclopentenyldimethoxysilane, di(3-cyclopentenyl)dimethoxysilane, bis(2,5-dimethyl-3-cyclopentenyl)dimethoxysilane, di-2,4-cyclopentadienyl)dimethoxysilane, bis(2,5-dimethyl-2,4-cyclopentadienyl)dimethoxysilane, bis(1-methyl-1-cyclopentylethyl)dimethoxysilane, cyclopentylcyclopentenyldimethoxysilane, cyclopentylcyclopentadienyldimethoxysilane, diindenyldimethoxysilane, bis(1,3-dimethyl-2-indenyl)dimethoxysilane, cyclopentadienylindenyldimethoxysilane, difluorenyldimethoxysilane, cyclopentylfluorenyldimethoxysilane and indenylfiuorenyldimethoxysilane; monoalkoxysilanes such as tricyclopentylmethoxysilane, tricyclopentenylmethoxysilane, tricyclopentadienylmethoxysilane, tricyclopentylethoxysilane, dicyclopentylmethylmethoxysilane, dicyclopentylethylmethoxysilane, dicyclopentylmethylethoxysilane, cyclopentyldimethylmethoxysilane, cyclopentyldiethylmethoxysilane, cyclopentyldimethylethoxysilane, bis(2,5-dimethylcyclopentyl)cyclopentylmethoxysilane, dicyclopentylcyclopentenylmethoxysilane, dicyclopentylcyclopentenadienylmethoxysilane, diindenylcyclopentylmethoxysilane and ethylenebis-cyclopentyldimethoxysilane; aminosilanes such as aminopropyltriethoxysilane, n-(3-triethoxysilylpropyl)amine, bis [(3-triethoxysilyl)propyl]amine, aminopropyltrimethoxysilane, aminopropylmethyldiethoxysilane, hexanediaminopropyltrimethoxysilane.

In an embodiment, the external electron donor, other than organosilicon compounds include amine, diether, esters, carboxylate, ketone, amide, phosphine, carbamate, phosphate, sulfonate, sulfone and/ or sulphoxide.

The external electron donor is used in such an amount to give a molar ratio of organoaluminum compound to the said external donor from about 0.1 to 500, preferably from 1 to 300.

In the present invention, the polymerization of olefins is carried out in the presence of the catalyst system described above. The catalyst system is contacted with olefin under polymerization conditions to produce desired polymer products. The polymerization process can be carried out such as slurry polymerization using diluent which is an inert hydrocarbon solvent, or bulk polymerization using the liquid monomer as a reaction medium and in gas-phase operating in one or more fluidized or mechanically agitated bed reactors. In an embodiment, polymerization is carried out as such. In another embodiment, the copolymerization is carried out using at least two polymerization zones.

The catalyst of the invention can be used in the polymerization of the above-defined olefin $CH_2$=CHR, the examples of said olefin include ethylene, propylene, 1-butene, 4-methyl-1-pentene, 1-hexene, and 1-octene. In particular, said catalyst can be used to produce, such as, the following products: high-density polyethylene (HDPE, having a density higher than 0.940 $g/cm^3$), which includes ethylene homopolymer and copolymer of ethylene and $\alpha$-olefins having 3 to 12 carbon atoms; linear low-density polyethylene (LLDPE, having a density lower than 0.940 $g/cm^3$), and very low density and ultra low density polyethylene (VLDPE and ULDPE, having a density lower than 0.920 $g/cm^3$, and as low as 0.880 $g/cm^3$), consisting of the copolymer of ethylene and one or more $\alpha$-olefins having 3 to 12 carbon atoms, wherein the molar content of the unit derived from ethylene is higher than 80%; elastomeric copolymer of ethylene and propylene, and elastomeric terpolymers of ethylene and propylene as well as diolefins at a small ratio, wherein the weight content of the unit derived from ethylene is between about 30% and 70%; isotactic polypropylene and crystalline copolymer of propylene and ethylene and/or other $\alpha$-olefins, wherein the content of the unit derived from propylene is higher than 85% by weight (random copolymer); impact propylene polymer, which are produced by sequential polymerization of propylene and the mixture of propylene and ethylene, with the content of ethylene being up to 40% by weight; copolymer of propylene and 1-butene, containing a great amount, such as from 10 to 40 percent by weight, of unit derived from 1-butene. It is especially significant that the propylene polymers produced by using the catalysts of the invention have very high isotactic index.

The polymerization is carried out at a temperature from 20 to 120° C, preferably from 40 to 80° C. When the polymerization is carried out in gas phase, operation pressure is usually in the range of from 5 to 100 bar preferably from 10 to 50 bar. The operation pressure in bulk polymerization is usually in the range of from 10 to 150 bar, preferably from 15 to 50 bar. The operation pressure in slurry polymerization is usually in the range of from 1 to 10 bar, preferably from 2 to 7 bar. Hydrogen can be used to control the molecular weight of polymers.

In the present invention, the polymerization of olefins is carried out in the presence of the catalyst system described above. The described catalyst can be directly added to the reactor for polymerization or can be prepolymerized i.e., catalyst is subjected to a polymerization at lower conversion extent before being added to polymerization reactor. Prepolymerization can be performed with olefins preferably ethylene and/or propylene where the conversion is controlled in the range from 0.2 to 500 gram polymer per gram catalyst.

In the present invention, the polymerization of olefins in presence of the described catalyst system leads to the formation of polyolefins having xylene soluble (XS) from about 0.2% to about 15%. In another embodiment, polyolefins having xylene soluble (XS) from about 2% to about 8%. Here XS refers to the weight percent of polymer that get dissolves into hot xylene generally for measuring the tacticity index such as highly isotactic polymer will have low XS % value i.e. higher crystallinity, whereas low isotactic polymer will have high XS % value.

The present invention provides the catalyst system. The catalysts system when polymerizes olefins provides polyolefins having melt flow indexes (MFI) from about 0.1 to about 100 which is measured according to ASTM standard D1238. In an embodiment, polyolefins having MFI from about 5 to about 30 are produced.

The present invention provides the catalyst system. The catalysts system when polymerizes olefins provides polyolefins having free flowing characteristics with bulk densities (BD) of at least about 0.4 g/cc.

Having described the basic aspects of the present invention, the following examples illustrate specific embodiment thereof.

## EXAMPLE 1

### Preparation of organomagnesium precursor

In 500 ml glass reactor maintained at desired temperature, calculated amount of magnesium (powder or turnings), organohalide, solvating agent and alcohol were weighed and added into the reactor. For liquid precursor synthesis, this mixture was stirred and gradually heated to 90°C±3. After the activation of the reaction, the mixture was allowed to be maintained at same temperature for 6 h. The resulting solution was viscous in nature.

For solid precursor synthesis, calculated amount of magnesium was added to the reactor followed by addition of calculated amount of organohalide followed by diethyl ether. This mixture was stirred and after the activation of the reaction, the mixture was allowed to be maintained at same temperature until all magnesium has reacted. To the resulting solution, the calculated amount of alcohol was added dropwise over a period of 1-2 h. After the completion of addition, the solution was allowed to stir for another 0.5 h. Finally, the ether was evaporated and solid compound was analyzed.

The liquid precursors synthesized by the above procedure have been tabulated in Table 1.

TABLE 1

| Precursor | Mg Ratio | Benzyl chloride Ratio | Alcohol Ratio | Solvent | Alcohol | Mg (wt%) |
|---|---|---|---|---|---|---|
| MGP#121 | 1 | 1.1 | 2.0 | chloro benzene | 2-ethyl-1-hexanol | 1.8 |
| MGP#PM-018 | 1 | 1.1 | 1.2 | toluene | 2-ethyl-1-hexanol | 1.1 |

Table 1 shows the mole ratios of the raw materials utilized for precursor synthesis along with the type of solvent and alcohol used.

The solid precursors synthesized by the above procedure have been tabulated in Table 2.

TABLE 2

| Precursor | Mg Ratio | Benzyl chloride Ratio | Alcohol Ratio | Solvent | Alcohol | Mg (wt%) | Cl (wt%) |
|---|---|---|---|---|---|---|---|
| MGP#124 | 1 | 1.1 | 1 | diethyl ether | 2-ethyl-1-hexanol | 12.5 | 18.6 |
| MGP#126 | 1 | 1.1 | 1 | diethyl ether | 2-ethyl-1-hexanol | 12.4 | 18.3 |
| MGP#132 | 1 | 1.1 | 1 | diethyl ether | 2-ethyl-1-hexanol | 12.3 | 18.4 |
| MGP#134 | 1 | 1.1 | 1 | diethyl ether | 2-ethyl-1-hexanol | 12.8 | 18.5 |
| MGP#136 | 1 | 1.1 | 1 | diethyl ether | 2-ethyl-1-hexanol | 12.4 | 18.3 |
| MGP#138 | 1 | 1.1 | 1 | diethyl ether | 2-ethyl-1-hexanol | 12.6 | 18.5 |

Table 2 shows the mole ratios of the raw materials utilized for precursor synthesis along with the type of solvent and alcohol used.

**Preparation of spray dried organomagnesium compound**

For spray dried precursor synthesis, firstly, calculated amount of magnesium was added to the reactor followed by addition of calculated amount of organohalide followed by diethyl ether. This mixture was stirred and after the activation of the reaction, the mixture was allowed to be maintained at same temperature until all magnesium has reacted. To the resulting solution, the calculated amount of alcohol was added dropwise over a period of 1-2 h. After the completion of addition, the solution was allowed to stir for another 0.5 h. The above precursor was subjected to spray dry to obtain spherical morphology with the following conditions:

1) The inlet temperature was set to 120°C
2) The feed flow rate 10mL/min
3) $N_2$ Flow 30mL/min

The spray dried precursors synthesized by the above procedure have been tabulated in Table 3.

TABLE 3

| Precursor | Mg Ratio | Benzyl chloride Ratio | Alcohol Ratio | Solvent | Alcohol | Mg (wt%) | Cl (wt%) |
|---|---|---|---|---|---|---|---|
| MGP#69 | 1 | 1.1 | 1 | diethyl ether | 2-ethyl-1-hexanol | 12.5 | 18.7 |
| MGP#80 | 1 | 1.1 | 1 | diethyl ether | 2-ethyl-1-hexanol | 11.6 | 17.9 |
| MGP#81-2 | 1 | 1.1 | 1 | diethyl ether | 2-ethyl-1-hexanol | 11.5 | 17.2 |
| MGP#1s | 1 | 1.1 | 1 | diethyl ether | Isobutanol | 19.2 | 21.2 |
| MGP#3s | 1 | 1.1 | 1 | diethyl ether | Isobutanol/ethanol | 24.4 | 25.4 |
| MGP#4s | 1 | 1.1 | 1 | diethyl ether | 2-ethyl-1-hexanol | 12.0 | 18.5 |
| MGP#5s | 1 | 1.1 | 1 | diethyl ether | 2-ethyl-1-hexanol | 11.5 | 17.8 |
| MGP#6s | 1 | 1.1 | 1 | diethyl ether | 2-ethyl-1-hexanol | 12.4 | 18.6 |
| MGP#8s | 1 | 1.1 | 1 | diethyl ether | 2-ethyl-1-hexanol | 12.9 | 18.9 |
| MGP#13s | 1 | 1.1 | 1 | diethyl ether | 2-ethyl-1-hexanol | 12.5 | 18.6 |
| MGP#21s | 1 | 1.1 | 1 | diethyl ether | 2-ethyl-1-hexanol/ethanol (75/35) | 13.6 | 19.7 |

For spray drying, some precursors were premixed with diisobutyl phthalate before spray drying. Table 4 describes the concentrations of magnesium precursors were used for spray drying and also the percentage of internal donor (DIBP) added during the spray drying.

TABLE 4

| S.No | Precursor No | % Mg concentration | % DIBP |
|---|---|---|---|
| 1 | MGP#80 | 3.3 | 5.7 |
| 2 | MGP#81-2 | 3.5 | 3.5 |

Table 4 describes the final composition of the spray dried precursors with respect to magnesium and DIBP

**Preparation of the catalyst composition**

To 130 ml of $TiCl_4$ solution maintained at desired temperature, added 13 g of the organomagnesium precursor along with internal donor (DIBP, 9.3 mmol) and stirred. After the system has attained the desired temperature, the resultant solution was maintained at the same temperature for 15 min. The resultant solution was clear orange in color. Gradually the reaction temperature was increased to 110°C and maintained for 1h. After settling and decantation, the suspended solid was again treated with 60ml $TiCl_4$ and 60ml chlorobenzene and after temperature reached 110°C, the mixture was maintained under stirring for 15 minutes. The above step was again repeated. After the reaction was finished, the solid was decanted and washed sufficiently with hexane at 70°C, respectively and further dried under hot nitrogen till freely flowing.

The solid catalysts composition synthesized by the above procedure has been tabulated in Table 5

**TABLE 5**

| Catalyst | Precursor | Charging Temp °C | Ramping Condition °C/min | Remark | Ti (wt %) | Mg (wt %) | Donor (wt%) | D50 | Span |
|---|---|---|---|---|---|---|---|---|---|
| ZN#272 | MGP#124 | -5 | -5 to 110/15 | RPM 500 | 2.9 | 18.0 | 14.4 | 10.5 | 1.6 |
| ZN#283 | MGP#124 | -5 | -5 to 40/60 | RPM 500 | 2.9 | 19.7 | 14.1 | 12 | 1.5 |
| ZN#275 | MGP#126 | -5 | -5 to 110/15 | RPM 350 | 2.8 | 19.2 | 14.5 | 14 | 1.6 |
| ZN#279 | MGP#126 | -5 | -5 to 40/60 | RPM 350 | 3.4 | 18.4 | 15.6 | 27 | 1.4 |
| ZN#280 | MGP#126 | -5 | -5 to 40/60 | RPM 500 | 2.5 | 19.0 | 15.5 | 24 | 1.3 |
| ZN#281 | MGP#126 | -5 | -5 to 40/60 | RPM 500 | 2.7 | 19.0 | 14.8 | 20 | 1.2 |
| ZN#284 | MGP#126 | -5 | -5 to 40/120 | RPM 500 | 2.8 | 19.5 | 13.6 | 14 | 2.1 |
| ZN#282 | MGP#132 | -5 | -5 to 40/60 | RPM 500 | 2.4 | 19.4 | 15.3 | 25 | 1.6 |
| ZN#286 | MGP#134 | -5 | -5 to 40/60 | RPM 500 | 2.9 | 19.1 | 12.8 | 24 | 1.3 |
| ZN#285 | MGP#136 | -5 | -5 to 40/60 | RPM 500 | 3.0 | 18.2 | 13.0 | 20 | 1.4 |
| ZN#289 | MGP#138 | -5 | -5 to 40/60 | RPM 500 | 2.6 | 18.6 | 13.6 | 25 | 1.5 |
| ZN#293 | MGP#138 | -5 | -5 to 40/60 | RPM 500 | 3.2 | 18.6 | 14.3 | 24 | 1.3 |
| ZN#538 | MGP#121 | -5 | -5 to 40/60 | RPM 500 | 3.7 | 17.9 | 13.0 | 23 | 1.2 |
| ZN#539 | MGP#PM-018 | -5 | -5 to 40/60 | RPM 500 | 3.2 | 18.8 | 13.5 | 24 | 1.2 |

Table 5 describes the various conditions for catalyst synthesis using precursor. The average particle size of the catalysts remains the same in spite of different synthetic conditions.

The Span or the distribution of the spherical particles is defined as

$$Span = \frac{D90 - D10}{D50}$$

The lower value of distribution of span indicates that the catalyst particles have narrow particle size distribution and hence good control over morphology.

The solid catalysts composition synthesized using spray dried precursor has been tabulated in Table 6

**TABLE 6**

| Catalyst | Precursor | Charging Temp °C | Ramping Condition °C/min | Remark | Ti (wt%) | Mg (wt% ) | Donor (wt%) | D50 | Span |
|---|---|---|---|---|---|---|---|---|---|
| ZN#199 | MGP#69 | -20 | -20 to 110/120 | RPM 500 | 3.3 | 17.3 | 12.9 | 10 | 1.2 |
| ZN#200 | MGP#81-2 | 30 | 30 to 110/30 | RPM 500 DIBP addition at 70°C | 3.9 | 18.5 | 9.0 | 12 | 1.3 |
| ZN#201 | MGP#81-2 Dispersed in 100 ml decane | 30 | 30 to 110/30 | RPM 500 DIBP addition at 30°C | 3.0 | 16.8 | 14.1 | 11 | 1.2 |
| ZN#504 | MGP#1s | -5 | -5 to 40/60 | RPM 500 DIBP addition at 70°C | 5.0 | 18.4 | 5.1 | 13.1 | 1.4 |
| ZN#514 | MGP#3s | -5 | -5 to 40/60 | RPM 500 DIBP addition at 70°C | 3.6 | 18.6 | 8.8 | 26.9 | 1.3 |
| ZN#515 | | -5 | -5 to 40/60 | RPM 500 DIBP addition at 70°C | 2.8 | 18.3 | 9.6 | 23.2 | 1.2 |
| ZN#518 | MGP#4s | -5 | -5 to 40/60 | RPM 500 DIBP addition at 70°C | 7.6 | 12.9 | 16.1 | 52.3 | 1.3 |
| ZN#519 | | -5 | -5 to 40/60 | RPM 500 DIBP addition at -5°C | 3.7 | 16.5 | 17.4 | 43.3 | 1.6 |
| ZN#528 | MGP#5s | 30 $TiCl_4$ added after DIBP | 30 to 110/20 | RPM 500 | 3.6 | 19.1 | 7.8 | 33.1 | 1.4 |
| ZN#529 | | 30 $TiCl_4$ added before DIBP | 30 to 110/20 | RPM 500 | 3.0 | 17.3 | 17.0 | 32.4 | 1.4 |
| ZN#530 | | 30 $TiCl_4$ added after DIBP | 30 to 110/20 | RPM 500 | 3.0 | 17.4 | 16.6 | 30.1 | 1.3 |
| ZN#531 | | 30 $TiCl_4$ added before DIBP | 30 to 110/20 | RPM 500 | 3.6 | 19.0 | 8.2 | 32.1 | 1.4 |

(continued)

| Catalyst | Precursor | Charging Temp °C | Ramping Condition °C/min | Remark | Ti (wt%) | Mg (wt% ) | Donor (wt%) | D50 | Span |
|---|---|---|---|---|---|---|---|---|---|
| ZN#532 | MGP#6s | 30 TiCl$_4$ added after DIBP | 30 to 110/20 | RPM 500 | 4.5 | 17.7 | 9.7 | 30.5 | 1.3 |
| ZN#533 | | 30 TiCl$_4$ added after DIBP | 30 to 110/20 | RPM 500 1.4 | 3.5 | 18.5 | 10.5 | 31.1 | 1.3 |
| ZN#534 | MGP#8s | 30 TiCl$_4$ added after DIBP | 30 to 110/20 | RPM 500 | 3.3 | 17.5 | 15.1 | 29.8 | 1.3 |
| ZN#536 | MGP#13 s | -5 MGP added to TiCl$_4$ followed by DIBP | -5 to 110/30 | RPM 500 | 4.3 | 13.7 | 25.8 | 20.1 | 1.4 |
| ZN#537 | | -5 MGP added to TiCl$_4$ followed by DIBP | -5 to 110/30 | RPM 500 No chlorobenzene addition during 1st titanation | 3.3 | 17.2 | 16.3 | 19.5 | 1.6 |
| ZN#540 | MGP#20s | 30 TiCl$_4$ added after DIBP | 30 to 110/20 | RPM 500 | 4.0 | 17.5 | 12.4 | 12.1 | 1.5 |

Table 6 describes the various conditions for catalyst synthesis using spray dried precursor.

For the catalysts, synthesized using solid precursor, following are the observations on the effect of various reaction parameters on morphology.

**Table 7** show the effect of variation in rate of heating on the catalyst D50 and Span.

| Catalyst | First pre-determined temperature (°C) | Second pre-determined temperature (°C) | Third pre-determined temperature (°C) | Rate of heating (°C/min) | Stirring/ agitation speed | D50 of catalyst micron | Span |
|---|---|---|---|---|---|---|---|
| ZN#494 | -5 | 40 | 110 | 3.0 | 500 | 10 | 3.3 |
| ZN#493 | -5 | 40 | 110 | 1.5 | 500 | 12 | 2.4 |
| ZN#489 | -5 | 40 | 110 | 0.75 | 500 | 24 | 1.2 |
| ZN#492 | -5 | 40 | 110 | 0.38 | 500 | 31 | 2.1 |

As the variation in rate of heating is increased, the mean particle size of the catalyst increases and the spherical morphology is lost as indicated by the higher span number.

**Table 8** shows the effect of constant rate of heating on the catalyst D50 and Span.

| Catalyst | First pre-determined temperature (°C) | Second pre-determined temperature (°C) | Third pre-determined temperature (°C) | Rate of heating (°C/min) | Stirring/ agitation speed | D50 of catalyst micron | Span |
|---|---|---|---|---|---|---|---|
| ZN#488 | -20 | 40 | 110 | 0.75 | 500 | 9 | 1.5 |

(continued)

| Catalyst | First pre-determined temperature (°C) | Second pre-determined temperature (°C) | Third pre-determined temperature (°C) | Rate of heating (°C/min) | Stirring/ agitation speed | D50 of catalyst micron | Span |
|---|---|---|---|---|---|---|---|
| ZN#489 | -5 | 40 | 110 | 0.75 | 500 | 24 | 1.2 |
| ZN#490 | -5 | nil | 110 | 0.75 | 500 | 14 | 1.8 |
| ZN#497 | -20 | nil | 110 | 0.75 | 500 | 17 | 1.7 |

The first pre-determined temperature and the second pre-determined temperature during catalyst synthesis affects the mean particle size of the catalyst.

**Table 9** shows the effect of agitation/stirring on the catalyst D50 and Span.

| Catalyst | First pre-determined temperature (°C) | Second pre-determined temperature (°C) | Third pre-determined temperature (°C) | Rate of heating (°C/min) | Stirring/ agitation speed | D50 of catalyst micron | Span |
|---|---|---|---|---|---|---|---|
| ZN#495 | -5 | 40 | 110 | 0.75 | 350 | 29 | 1.8 |
| ZN#489 | -5 | 40 | 110 | 0.75 | 500 | 24 | 1.2 |
| ZN#496 | -5 | 40 | 110 | 0.75 | 650 | 14 | 2.5 |

The rate of stirring effects the mean particle size of the catalyst as the stirring is increased particle size decreases and also the morphology of the particles is no longer spherical as indicated by the span value.

The rate of heating as indicated in above tables 7-9 are the rate of heating for first pre-determined temperature to the second pre-determined temperature and for first pre-determined temperature to third pre-determined temperature in cases where second pre-determined temperature is nil.

## EXAMPLE 2

### Slurry polymerization of propylene

Propylene polymerization was carried out in 1 L buchi reactor which was previously conditioned under nitrogen. The reactor was charged with 250 ml of dry hexane containing solution of 10 wt% triethylaluminum followed by 100 ml of dry hexane containing 10 wt% solution of triethylaluminum, 5 wt% solution of cyclohexyl methyl dimethoxysilane and weighed amount of catalyst. The reactor was charged with hydrogen and then pressurized with 0.49 N/mm$^2$ (71 psi) of propylene under stirring at 750 rpm. The reactor was heated to and then held at 70°C for 2 hour. At the end, the reactor was vented and the polymer was recovered at ambient conditions. Catalyst performance and polymer properties has been tabulated in Table 10

**TABLE 10**

| CATALYST | | POLYMERIZATION | | | | POLYMER ANALYSIS | | |
|---|---|---|---|---|---|---|---|---|
| Cat No | Cat wt (mg) | Al/Ti ratio | H2 ml | Al/Do ratio | Activity kgPP/gcat | MFI g/min | XS wt% | BD (tapped) |
| ZN#272 | 10.6 | 500 | 10 | 30 | 9.0 | 3.3 | 3.4 | 0.39 |
| ZN#283 | 10.3 | 500 | 10 | 30 | 8.5 | 3.6 | 3.6 | 0.43 |
| ZN#275 | 10.2 | 500 | 10 | 30 | 9.0 | 3.6 | 3.9 | 0.40 |
| ZN#279 | 10.1 | 500 | 10 | 30 | 9.6 | 3.0 | 3.1 | 0.32 |
| ZN#280 | 10.6 | 500 | 10 | 30 | 8.6 | 2.9 | 3.2 | 0.40 |
| ZN#281 | 10.4 | 500 | 10 | 30 | 8.8 | 3.0 | 3.5 | 0.41 |
| ZN#284 | 10.5 | 500 | 10 | 30 | 6.8 | 4.0 | 3.7 | 0.45 |

(continued)

| CATALYST | | POLYMERIZATION | | | | POLYMER ANALYSIS | | |
|---|---|---|---|---|---|---|---|---|
| Cat No | Cat wt (mg) | Al/Ti ratio | H2 ml | Al/Do ratio | Activity kgPP/gcat | MFI g/min | XS wt% | BD (tapped) |
| ZN#282 | 10.0 | 500 | 10 | 30 | 7.3 | 3.5 | 3.3 | 0.37 |
| ZN#285 | 10.2 | 500 | 10 | 30 | 8.5 | 3.7 | 3.4 | 0.39 |
| ZN#286 | 10.5 | 500 | 10 | 30 | 8.5 | 4.1 | 3.5 | 0.39 |
| ZN#289 | 10.0 | 500 | 10 | 30 | 10.0 | 4.2 | 5.4 | 0.41 |
| ZN#293 | 10.4 | 500 | 10 | 30 | 7.4 | 2.1 | 3.4 | 0.43 |
| ZN#199 | 10 | 500 | 10 | 20 | 6.8 | 6.7 | 2.3 | 0.37 |
| ZN#200 | 10.7 | 500 | 10 | 20 | 8.5 | 6.5 | 2.5 | 0.37 |
| ZN#201 | 10.7 | 500 | 10 | 20 | 6.0 | 6.8 | 2.4 | 0.38 |
| ZN#504 | 10.4 | 500 | 10 | 30 | 5.2 | 8.5 | 3.0 | 0.29 |
| ZN#514 | 10.5 | 500 | 10 | 30 | 4.9 | 6.9 | 3.1 | 0.40 |
| ZN#515 | 10.2 | 500 | 10 | 30 | 6.2 | 5.3 | 3.0 | 0.40 |
| ZN#519 | 10.2 | 500 | 10 | 30 | 5.2 | 5.4 | 3.3 | 0.37 |
| ZN#528 | 10.5 | 500 | 10 | 30 | 4.6 | 2.3 | 3.6 | 0.39 |
| ZN#529 | 10.3 | 500 | 10 | 30 | 5.9 | 2.0 | 3.9 | 0.41 |
| ZN#530 | 10.3 | 500 | 10 | 30 | 5.0 | 1.7 | 3.5 | 0.42 |
| ZN#531 | 10.4 | 500 | 10 | 30 | 5.1 | 3.3 | 3.3 | 0.41 |
| ZN#532 | 10.4 | 500 | 10 | 30 | 4.6 | 4.5 | 3.7 | 0.40 |
| ZN#533 | 10.2 | 500 | 10 | 30 | 5.5 | 2.7 | 3.9 | 0.40 |
| ZN#534 | 10.3 | 500 | 10 | 30 | 5.5 | 2.3 | 3.3 | 0.40 |
| ZN#536 | 10.4 | 500 | 10 | 30 | 7.0 | 5.3 | 2.0 | 0.37 |
| ZN#537 | 10.3 | 500 | 10 | 30 | 6.6 | 4.0 | 1.8 | 0.35 |
| ZN#538 | 10.5 | 500 | 10 | 30 | 5.7 | 5.5 | 1.4 | 0.32 |
| ZN#539 | 10.5 | 500 | 10 | 30 | 5.1 | 4.4 | 1.8 | 0.39 |
| ZN#540 | 10.2 | 500 | 10 | 30 | 4.9 | 4.0 | 2.2 | 0.35 |

The catalyst synthesized showed good activity for propylene polymerization generating polymer have desired solubles and melt flow index.

Claims

1.    A process for preparing spherical particles of a catalyst composition, the process comprising:

contacting an organomagnesium precursor with a transition metal compound in presence of an internal donor to obtain a reaction mixture;
heating the reaction mixture from a first pre-determined temperature to a second pre-determined temperature and thereafter heating the reaction mixture from second pre-determined temperature to a third pre-determined temperature to obtain spherical particles of the catalyst composition,
wherein heating the reaction mixture from the first pre-determined temperature to the second pre-determined temperature is instigated for a fixed period of time in the range of 5 to 200 minutes at a rate of 0.01 to 10.0°C/minute;

wherein the heating of the reaction mixture from the first pre-determined temperature to the second pre-determined temperature is done at an agitation/stirring speed of 100 to 1000 rpm;

wherein the organomagnesium precursor is liquid in nature and is prepared by contacting magnesium source with organohalide and alcohol in presence of a solvent in a single step or the organomagnesium precursor is solid in nature and is prepared by first contacting the magnesium source with organohalide in presence of solvating agent as the first step and then followed by addition of alcohol.

2. The process of claim 1, wherein heating is instigated for a fixed period of time at a rate of 0.1 to 5.0°C/minute.

3. The process of claim 1, wherein the first pre-determined temperature is the temperature of the reaction mixture and is in the range of -50°C to 50°C, or -30°C to 30°C.

4. The process of claim 1, wherein the second pre-determined temperature is in the range of 20 to 40°C.

5. The process of claim 1, wherein the third pre-determined temperature is in the range of 100 to 120°C.

6. The process of claim 1, wherein molar ratio of the organomagnesium precursor: transition metal compound : internal donor is used in the range of 1: 1-200: 0.01 - 0.05.

7. The process of claim 1, wherein the agitation/stirring speed is in the range of 200 rpm to 800 rpm.

8. The process of claim 1, wherein the size of the spherical catalyst particles is in the range of 10 to 40 $\mu$m.

9. The process of claim 1, wherein the internal electron donor used is selected from a group comprising of phthalates, benzoates, succinates, malonates, carbonates, diethers, and combinations thereof, wherein:

(a) the phthalate is selected from a group comprising of di-n-butyl phthalate, di-i-butyl phthalate, di-2-ethylhexyl phthalate, di-n-octyl phthalate, di-i-octyl phthalate, di-n-nonyl phthalate;
(b) the benzoate is selected from a group comprising of methyl benzoate, ethyl benzoate, propyl benzoate, phenyl benzoate, cyclohexyl benzoate, methyl toluate, ethyl toluate, p-ethoxy ethyl benzoate, p-isopropoxy ethyl benzoate;
(c) the succinate is selected from a group comprising of diethyl succinate, dipropyl succinate, diisopropyl succinate, dibutyl succinate, diisobutyl succinate;
(d) the malonate is selected from a group comprising of diethyl malonate, diethyl ethylmalonate, diethyl propyl malonate, diethyl isopropylmalonate, diethyl butylmalonate;
(e) the carbonate compound is selected from a group comprising of diethyl 1,2-cyclohexanedicarboxylate, di-2-ethylhexyl 1,2-cyclohexanedicarboxylate, di-2- isononyl 1,2-cyclohexanedicarboxylate, methyl anisate, ethyl anisate; and
(f) the diether compound is selected from a group comprising of 9,9-bis(methoxymethyl)fluorene, 2-isopropyl-2-isopentyl-1,3-dimethoxypropane, 2,2-diisobutyl-1,3-dimethoxypropane, 2,2-diisopentyl-1,3-dimethoxypropane, 2-isopropyl-2-cyclohexyl- 1,3-dimethoxypropane.

10. The process of claim 1, wherein, the transition metal compound represented by $M(OR)_pX_{4-p}$, where M is selected from a group comprising of Ti, V, Zr and Hf; X is a halogen atom; R is a hydrocarbon group and p is an integer having value equal or less than 4, the transition metal compound is selected from a group comprising of transition metal tetrahalide, alkoxy transition metal trihalide/aryloxy transition metal trihalide, dialkoxy transition metal dihalide, trialkoxy transition metal monohalide, tetraalkoxy transition metal, and mixtures thereof, wherein:

(a) the transition metal tetrahalide is selected from a group comprising of titanium tetrachloride, titanium tetrabromide and titanium tetraiodide for V, Zr and Hf;
(b) alkoxy transition metal trihalide/aryloxy transition metal trihalide is selected from a group comprising of methoxytitanium trichloride, ethoxytitanium trichloride, butoxytitanium trichloride and phenoxytitanium trichloride for V, Zr and Hf;
(c) dialkoxy transition metal dihalide is diethoxy transition metal dichloride for V, Zr and Hf;
(d) trialkoxy transition metal monohalide is triethoxy transition metal chloride for V, Zr and Hf; and
(e) tetraalkoxy transition metal is selected from a group comprising of tetrabutoxy titanium and tetraethoxy titanium for V, Zr and Hf.

11. The process of claim 1, wherein the transition metal compound is titanium compound represented by $Ti(OR)_pX_{4-p}$, where X is a halogen atom; R is a hydrocarbon group and p is an integer having value equal or less than 4.

12. The process of claim 1, wherein the organomagnesium precursor is spray dried organomagnesium precursor having spherical morphology and is prepared by first contacting the magnesium source with organohalide in presence of solvating agent as the first step and then followed by addition of alcohol and then subjected to spray dried to obtain spherical morphology of the organomagnesium precursor.

13. The process of claims 1 and 12, wherein the solvating agent is selected from a group comprising of dimethyl ether, diethyl ether, dipropyl ether, diisopropyl ether, ethylmethyl ether, n-butylmethyl ether, n-butylethyl ether, di-n-butyl ether, diisobutyl ether, isobutylmethyl ether, and isobutylethyl ether, dioxane, tetrahydrofuran, 2-methyl tetrahydrofuran, tetrahydropyran and combination thereof.

14. The process of claims 1 and 12, wherein the magnesium source is selected from a group comprising of magnesium metal, dialkyl magnesium, alkyl/aryl magnesium halides and mixtures thereof; wherein:

    (a) the magnesium metal is in form of powder, ribbon, turnings, wire, granules, block, lumps, chips;
    (b) the dialkylmagnesium compounds is selected from a group comprising of dimethylmagnesium, diethylmagnesium, diisopropylmagnesium, dibutylmagnesium, dihexylmagnesium, dioctylmagnesium, ethylbutylmagnesium, and butyloctylmagnesium; and
    (c) alkyl/aryl magnesium halides is selected from a group comprising of methylmagnesium chloride, ethylmagnesium chloride, isopropylmagnesium chloride, isobutylmagnesium chloride, tert-butylmagnesium chloride, benzylmagnesium chloride, methylmagnesium bromide, ethylmagnesium bromide, isopropylmagnesium bromide, isobutylmagnesium bromide, tert-butylmagnesium bromide, hexylmagnesium bromide, benzylmagnesium bromide, methylmagnesium iodide, ethylmagnesium iodide, isopropylmagnesium iodide, isobutylmagnesium iodide, tert-butylmagnesium iodide, and benzylmagnesium iodide.

15. The process of claims 1 and 12, wherein the organohalide is selected from a group comprising of alkyl halides either branched or linear, halogenated alkyl benzene/benzylic halides having an alkyl radical contains from 10 to 15 carbon atoms and mixtures thereof; wherein:

    (a) the alkyl halides is selected from a group comprising of methyl chloride, ethyl chloride, propyl chloride, isopropyl chloride, dichloromethane, chloroform, carbon tetrachloride, 1,1-dichloropropane, 1,2-dichloropropane, 1,3-dichloropropane, 2,3-dichloropropane, n-butyl chloride, iso-butyl chloride, 1,4-dichlorobutane, tert-butylchloride, amylchloride, tert-amylchloride, 2-chloropentane, 3-chloropentane, 1,5-dichloropentane, 1-chloro-8-iodoctane, 1-chloro-6-cyanohexane, cyclopentylchloride, cyclohexylchloride, chlorinated dodecane, chlorinated tetradecane, chlorinated eicosane, chlorinated pentacosane, chlorinated triacontane, iso-octylchloride, 5-chloro-5-methyl decane, 9-chloro-9-ethyl-6-methyl eiscosane; and
    (b) the halogenated alkyl benzene/benzylic halides is selected from a group comprising of benzyl chloride and $\alpha,\alpha'$ dichloro xylene.

16. The process of claims 1 and 12, wherein the alcohol is selected from a group comprising of aliphatic alcohols, alicyclic alcohols, aromatic alcohols, aliphatic alcohols containing an alkoxy group, diols and mixture thereof; wherein:

    (a) the aliphatic alcohols is selected from a group comprising of methanol, ethanol, propanol, n-butanol, iso-butanol, t-butanol, n-pentanol, iso-pentanol, n-hexanol, 2-methylpentanol, 2-ethylbutanol, n-heptanol, n-octanol, 2-ethylhexanol, decanol and dodecanol,
    (b) the alicyclic alcohols is selected from a group comprising of cyclohexanol and methylcyclohexanol,
    (c) the aromatic alcohols is selected from a group comprising of benzyl alcohol and methylbenzyl alcohol,
    (d) the aliphatic alcohols containing an alkoxy group is selected from a group comprising of ethyl glycol and butyl glycol;
    (e) the diols is selected from a group comprising of catechol, ethylene glycol, 1,3-propanediol, 1,4-butanediol, 1,5-pentanediol, 1,8-octanediol, 1,2-propanediol, 1,2-butanediol, 2,3-butanediol, 1,3-butanediol, 1,2-pentanediol, p-menthane-3,8- diol, and 2-methyl-2,4-pentanediol.

17. The process of claim 1, wherein the spherical catalyst composition comprising a combination of 2.0 wt % to 20 wt % of an internal electron donor, 0.5 wt % to 10.0 wt% of a transition metal and 10 wt% to 20 wt % of a magnesium.

18. A process for the preparation of a spherical catalyst system, said process comprising contacting the spherical catalyst composition as obtained by claim 1 with at least one cocatalyst, and at least one external electron donor to obtain the spherical catalyst system.

**Patentansprüche**

1. Verfahren zur Herstellung kugelförmiger Teilchen einer Katalysatorzusammensetzung, wobei man bei dem Verfahren:

    eine Organomagnesium-Vorstufe in Gegenwart eines internen Donators unter Erhalt einer Reaktionsmischung mit einer Übergangsmetallverbindung in Kontakt bringt,
    die Reaktionsmischung von einer ersten vorgegebenen Temperatur auf eine zweite vorgegebene Temperatur erhitzt und anschließend die Reaktionsmischung von der zweiten vorgegebenen Temperatur unter Erhalt von kugelförmigen Teilchen der Katalysatorzusammensetzung auf eine dritte vorgegebene Temperatur erhitzt;
    wobei das Erhitzen der Reaktionsmischung von der ersten vorgegebenen Temperatur auf die zweite vorgegebene Temperatur über einen festgelegten Zeitraum im Bereich von 5 bis 200 Minuten mit einer Rate von 0,01 bis 10,0 °C/Minute durchgeführt wird;
    wobei das Erhitzen der Reaktionsmischung von der ersten vorgegebenen Temperatur auf die zweite vorgegebene Temperatur mit einer Bewegungs-/Rührgeschwindigkeit von 100 bis 1000 U/min durchgeführt wird;
    wobei die Organomagnesium-Vorstufe flüssig ist und in einem Schritt hergestellt wird, indem man die Magnesiumquelle in Gegenwart eines Lösungsmittels mit einem Organohalogenid und einem Alkohol in Kontakt bringt, oder wobei die Organomagnesium-Vorstufe fest ist und hergestellt wird, indem man als ersten Schritt zunächst die Magnesiumquelle in Gegenwart eines Solvatisierungsmittels mit einem Organohalogenid in Kontakt bringt und dann einen Alkohol zugibt.

2. Verfahren nach Anspruch 1, wobei das Erhitzen über einen festgelegten Zeitraum mit einer Rate von 0,1 bis 5,0 °C/Minute durchgeführt wird.

3. Verfahren nach Anspruch 1, wobei die erste vorgegebene Temperatur die Temperatur der Reaktionsmischung ist und im Bereich von -50 °C bis 50 °C oder -30 °C bis 30 °C liegt.

4. Verfahren nach Anspruch 1, wobei die zweite vorgegebene Temperatur im Bereich von 20 bis 40 °C liegt.

5. Verfahren nach Anspruch 1, wobei die dritte vorgegebene Temperatur im Bereich von 100 bis 120 °C liegt.

6. Verfahren nach Anspruch 1, wobei ein Molverhältnis von Organomagnesium-Vorstufe : Übergangsmetallverbindung : internem Donator im Bereich von 1 : 1-200 : 0,01-0,05 verweindet wird.

7. Verfahren nach Anspruch 1, wobei die Bewegungs-/Rührgeschwindigkeit im Bereich von 200 U/min bis 800 U/min liegt.

8. Verfahren nach Anspruch 1, wobei die Größe der kugelförmigen Katalysatorteilchen im Bereich von 10 bis 40 $\mu$m liegt.

9. Verfahren nach Anspruch 1, wobei der verwendete interne Elektronendonator aus der Gruppe bestehend aus Phthalaten, Benzoaten, Succinaten, Malonaten, Carbonaten, Diethern und Kombinationen davon ausgewählt wird, wobei:

    (a) das Phthalat aus der Gruppe bestehend aus Din-butylphthalat, Di-i-butylphthalat, Di-2-ethylhexylphthalat, Di-n-octylphthalat, Di-i-octylphthalat, Di-n-nonylphthalat ausgewählt wird;
    (b) das Benzoat aus der Gruppe bestehend aus Methylbenzoat, Ethylbenzoat, Propylbenzoat, Phenylbenzoat, Cyclohexylbenzoat, Methyltoluat, Ethyltoluat, p-Ethoxyethylbenzoat, p-Isopropoxyethylbenzoat ausgewählt wird;
    (c) das Succinat aus der Gruppe bestehend aus Diethylsuccinat, Dipropylsuccinat, Diisopropylsuccinat, Dibutylsuccinat, Diisobutylsuccinat ausgewählt wird;
    (d) das Malonat aus der Gruppe bestehend aus Diethylmalonat, Diethylethylmalonat, Diethylpropylmalonat, Diethylisopropylmalonat, Diethylbutylmalonat ausgewählt wird;
    (e) die Carbonatverbindung aus der Gruppe bestehend aus Diethyl-1,2-cyclohexandicarboxylat, Di-2-ethylhexyl-1,2-cyclohexandicarboxylat, Di-2-isononyl-1,2-cyclohexandicarboxylat, Methylanisat, Ethylanisat ausgewählt wird und

(f) die Dietherverbindung aus der Gruppe bestehend aus 9,9-Bis(methoxymethyl)fluoren, 2-Isopropyl-2-isopentyl-1,3-dimethoxypropan, 2,2-Diisobutyl-1,3-dimethoxypropan, 2,2-Diisopentyl-1,3-dimethoxypropan, 2-Isopropyl-2-cyclohexyl-1,3-dimethoxypropan ausgewählt wird.

10. Verfahren nach Anspruch 1, wobei die Übergangsmetallverbindung durch $M(OR)_pX_{4-p}$ wiedergegeben wird, wobei M aus der Gruppe bestehend aus Ti, V, Zr und Hf ausgewählt ist, X für ein Halogenatom steht, R für eine Kohlenwasserstoffgruppe steht und p für eine ganze Zahl mit einem Wert gleich oder kleiner als 4 steht, wobei die Übergangsmetallverbindung aus der Gruppe bestehend aus einem Übergangsmetalltetrahalogenid, Alkoxyübergangsmetalltrihalogenid/ Aryloxyübergangsmetalltrihalogenid, Dialkoxyübergangsmetalldihalogenid, Trialkoxyübergangsmetallmonohalogenid, Tetraalkoxyübergangsmetall und Mischungen davon ausgewählt wird; wobei

(a) das Übergangsmetalltetrahalogenid aus der Gruppe bestehend aus Titantetrachlorid, Titantetrabromid und Titantetraiodid für V, Zr und Hf ausgewählt wird,
(b) das Alkoxyübergangsmetalltrihalogenid/Aryloxyübergangsmetalltrihalogenid aus der Gruppe bestehend aus Methoxytitantrichlorid, Ethoxytitantrichlorid, Butoxytitantrichlorid und Phenoxytitantrichlorid für V, Zr und Hf ausgewählt ist,
(c) es sich bei dem Dialkoxyübergangsmetalldihalogenid um Diethoxyübergangsmetalldichlorid für V, Zr und Hf handelt,
(d) es sich bei dem Trialkoxyübergangsmetallmonohalogenid um Triethoxyübergangsmetallchlorid für V, Zr und Hf handelt und
(e) das Tetraalkoxyübergangsmetall aus der Gruppe bestehend aus Tetrabutoxytitan und Tetraethoxytitan für V, Zr und Hf ausgewählt wird.

11. Verfahren nach Anspruch 1, wobei es sich bei der Übergangsmetallverbindung um eine Titanverbindung handelt, die durch $M(OR)_pX_{4-p}$ wiedergegeben wird, wobei X für ein Halogenatom steht, R für eine Kohlenwasserstoffgruppe steht und p für eine ganze Zahl mit einem Wert gleich oder kleiner als 4 steht.

12. Verfahren nach Anspruch 1, wobei die Organomagnesium-Vorstufe eine sprühgetrocknete Organomagnesium-Vorstufe mit kugelförmiger Morphologie ist und hergestellt wird, indem man als ersten Schritt zunächst die Magnesiumquelle in Gegenwart eines Solvatisierungsmittels mit einem Organohalogenid in Kontakt bringt und dann einen Alkohol zugibt und sie dann einer Sprühtrocknung unterwirft, damit die Organomagnesium-Vorstufe eine kugelförmige Morphologie erhält.

13. Verfahren nach den Ansprüchen 1 und 12, wobei das Solvatisierungsmittel aus der Gruppe bestehend aus Dimethylether, Diethylether, Dipropylether, Diisopropylether, Ethylmethylether, n-Butylmethylether, n-Butylethylether, Di-n-butylether, Diisobutylether, Isobutylmethylether und Isobutylethylether, Dioxan, Tetrahydrofuran, 2-Methyltetrahydrofuran, Tetrahydropyran und Kombinationen davon ausgewählt wird.

14. Verfahren nach den Ansprüchen 1 und 12, wobei die Magnesiumquelle aus der Gruppe bestehend aus Magnesiummetall, Dialkylmagnesium, Alkyl-/Arylmagnesiumhalogeniden und Mischungen davon ausgewählt wird, wobei:

(a) das Magnesiummetall in Form von Pulver, Bändern, Spänen, Draht, Granulat, Blöcken, Klumpen, Splitt vorliegt;
(b) die Dialkylmagnesiumverbindung aus der Gruppe bestehend aus Dimethylmagnesium, Diethylmagnesium, Diisopropylmagnesium, Dibutylmagnesium, Dihexylmagnesium, Dioctylmagnesium, Ethylbutylmagnesium und Butyloctylmagnesium ausgewählt wird und
(c) das Alkyl-/Arylmagnesiumhalogenid aus der Gruppe bestehend aus Methylmagnesiumchlorid, Ethylmagnesiumchlorid, Isopropylmagnesiumchlorid, Isobutylmagnesiumchlorid, tert-Butylmagnesiumchlorid, Benzylmagnesiumchlorid, Methylmagnesiumbromid, Ethylmagnesiumbromid, Isopropylmagnesiumbromid, Isobutylmagnesiumbromid, tert-Butylmagnesiumbromid, Hexylmagnesiumbromid, Benzylmagnesiumbromid, Methylmagnesiumiodid, Ethylmagnesiumiodid, Isopropylmagnesiumiodid, Isobutylmagnesiumiodid, tert-Butylmagnesiumiodid und Benzylmagnesiumiodid ausgewählt wird.

15. Verfahren nach den Ansprüchen 1 und 12, wobei das Organohalogenid aus der Gruppe bestehend aus verzweigten oder geradkettigen Alkylhalogeniden, halogeniertem Alkylbenzol/Benzylhalogeniden mit einem 10 bis 15 Kohlenstoffatome enthaltenden Alkylrest und Mischungen davon ausgewählt wird, wobei:

(a) das Alkylhalogenid aus der Gruppe bestehend aus Methylchlorid, Ethylchlorid, Propylchlorid, Isopropylchlorid, Dichlormethan, Chloroform, Tetrachlorkohlenstoff, 1,1-Dichlorpropan, 1,2-Dichlorpropan, 1,3-Dichlorpropan, 2,3-Dichlorpropan, n-Butylchlorid, Isobutylchlorid, 1,4-Dichlorbutan, tert-Butylchlorid, Amylchlorid, tert-Amylchlorid, 2-Chlorpentan, 3-Chlorpentan, 1,5-Dichlorpentan, 1-Chlor-8-iodoctan, 1-Chlor-6-cyanohexan, Cyclopentylchlorid, Cyclohexylchlorid, chloriertem Dodecan, chloriertes Tetradecan, chloriertem Eicosan, chloriertem Pentacosan, chloriertem Triacontan, Isooctylchlorid, 5-Chlor-5-methyldecan, 9-Chlor-9-ethyl-6-methyleiscosan ausgewählt wird und

(b) das halogenierte Alkylbenzol/Benzylhalogenid aus der Gruppe bestehend aus Benzylchlorid und $\alpha,\alpha'$-Dichlorxylol ausgewählt wird.

16. Verfahren nach den Ansprüchen 1 und 12, wobei der Alkohol aus der Gruppe bestehend aus aliphatischen Alkoholen, alicyclischen Alkoholen, aromatischen Alkoholen, aliphatischen Alkoholen mit einer Alkoxygruppe, Diolen und Mischungen davon ausgewählt wird, wobei:

(a) der aliphatische Alkohol aus der Gruppe bestehend aus Methanol, Ethanol, Propanol, n-Butanol, Isobutanol, t-Butanol, n-Pentanol, Isopentanol, n-Hexanol, 2-Methylpentanol, 2-Ethylbutanol, n-Heptanol, n-Octanol, 2-Ethylhexanol, Decanol und Dodecanol ausgewählt wird,

(b) der alicyclische Alkohol aus der Gruppe bestehend aus Cyclohexanol und Methylcyclohexanol ausgewählt wird,

(c) der aromatische Alkohol aus der Gruppe bestehend aus Benzylalkohol und Methylbenzylalkohol ausgewählt wird,

(d) der aliphatische Alkohol mit einer Alkoxygruppe aus der Gruppe bestehend aus Ethylglykol und Butylglykol ausgewählt wird;

(e) das Diol aus der Gruppe bestehend aus Brenzcatechin, Ethylenglykol, 1,3-Propandiol, 1,4-Butandiol, 1,5-Pentandiol, 1,8-Octandiol, 1,2-Propandiol, 1,2-Butandiol, 2,3-Butandiol, 1,3-Butandiol, 1,2-Pentandiol, p-Menthan-3,8-diol und 2-Methyl-2,4-pentandiol ausgewählt wird.

17. Verfahren nach Anspruch 1, wobei die kugelförmige Katalysatorzusammensetzung eine Kombination von 2,0 Gew.-% bis 20 Gew.-% internem Elektronendonator, 0,5 Gew.-% bis 10,0 Gew.-% Übergangsmetall und 10 Gew.-% bis 20 Gew.-% Magnesium umfasst.

18. Verfahren zur Herstellung eines kugelförmigen Katalysatorsystems, bei dem man die gemäß Anspruch 1 erhaltene kugelförmige Katalysatorzusammensetzung unter Erhalt des kugelförmigen Katalysatorsystems mit mindestens einem Cokatalysator und mindestens einem externen Elektronendonator in Kontakt bringt.

## Revendications

1. Procédé pour la préparation de particules sphériques d'une composition de catalyseur, le procédé comprenant :

la mise en contact d'un précurseur d'organomagnésium avec un composé de métal de transition en présence d'un donneur interne pour obtenir un mélange réactionnel ;
le chauffage du mélange réactionnel d'une première température prédéterminée à une deuxième température prédéterminée et ensuite le chauffage du mélange réactionnel de la deuxième température prédéterminée à une troisième température prédéterminée pour obtenir des particules sphériques de la composition de catalyseur,
le chauffage du mélange réactionnel de la première température prédéterminée à la deuxième température prédéterminée étant déclenché pendant une période de temps déterminée dans la plage de 5 à 200 minutes à une vitesse de 0,01 à 10,0 °C/minute ;
le chauffage du mélange réactionnel de la première température prédéterminée à la deuxième température prédéterminée étant réalisé à une vitesse d'agitation/de brassage de 100 à 1000 tpm ;
le précurseur d'organomagnésium étant liquide par nature étant préparé par mise en contact d'une source de magnésium avec un organohalogénure et un alcool en présence d'un solvant en une seule étape ou le précurseur d'organomagnésium étant solide par nature et étant préparé par, tout d'abord, mise en contact de la source de magnésium avec un organohalogénure en présence d'un agent de solvatation en tant que première étape et ensuite suivie par addition d'un alcool.

2. Procédé selon la revendication 1, le chauffage étant déclenché pendant une période de temps déterminée à une vitesse de 0,1 à 5,0 °C/minute.

3. Procédé selon la revendication 1, la première température prédéterminée étant la température du mélange réactionnel et se situant dans la plage de -50 °C à 50 °C, ou de -30 °C à 30 °C.

4. Procédé selon la revendication 1, la deuxième température prédéterminée se situant dans la plage de 20 à 40 °C.

5. Procédé selon la revendication 1, la troisième température prédéterminée se situant dans la plage de 100 à 120 °C.

6. Procédé selon la revendication 1, un rapport molaire du précurseur d'organomagnésium : composé de métal de transition : donneur interne étant utilisé dans la plage de 1:1 à 200:0,01 à 0,05.

7. Procédé selon la revendication 1, la vitesse d'agitation/de brassage se situant dans la plage de 200 tpm à 800 tpm.

8. Procédé selon la revendication 1, la grosseur des particules sphériques de catalyseur se situant dans la plage de 10 à 40 $\mu$m.

9. Procédé selon la revendication 1, le donneur d'électrons interne utilisé étant choisi dans le groupe composé des phtalates, des benzoates, des succinates, des malonates, des carbonates, des diéthers, et des combinaisons correspondantes,

(a) le phtalate étant choisi dans un groupe composé du phtalate de di-n-butyle, du phtalate de di-i-butyle, du phtalate de di-2-éthylhexyle, du phtalate de di-n-octyle, du phtalate de di-i-octyle, du phtalate de di-n-nonyle ;
(b) le benzoate étant choisi dans un groupe composé du benzoate de méthyle, du benzoate d'éthyle, du benzoate de propyle, du benzoate de phényle, du benzoate de cyclohexyle, du toluate de méthyle, du toluate d'éthyle, du p-éthoxybenzoate d'éthyle, du p-isopropoxybenzoate d'éthyle ;
(c) le succinate étant choisi dans un groupe comprenant le succinate de diéthyle, le succinate de dipropyle, le succinate de diisopropyle, le succinate de dibutyle, le succinate de diisobutyle ;
(d) le malonate étant choisi dans un groupe composé du malonate de diéthyle, de l'éthylmalonate de diéthyle, du propylmalonate de diéthyle, de l'isopropylmalonate de diéthyle, du butylmalonate de diéthyle ;
(e) le composé le carbonate étant choisi dans un groupe composé du 1,2-cyclohexanedicarboxylate de diéthyle, le 1,2-cyclohexanedicarboxylate de di-2-éthylhexyle, le 1,2-cyclohexanedicarboxylate de di-2-isononyle, l'anisate de méthyle, l'anisate d'éthyle ; et
(f) le composé de diéther étant choisi dans un groupe composé du 9,9-bis(méthoxyméthyl)fluorène, du 2-isopropyl-2-isopentyl-1,3-diméthoxypropane, du 2,2-diisobutyl-1,3-diméthoxypropane, du 2,2-diisopentyl-1,3-diméthoxypropane, du 2-isopropyl-2-cyclohexyl-1,3-diméthoxypropane.

10. Procédé selon la revendication 1, le composé de métal de transition étant représenté par $M(OR)_pX_{4-p}$, dans lequel M est choisi dans un groupe composé de Ti, V, Zr et Hf ; X est un atome d'halogène ; R est un groupe hydrocarboné et p est un entier possédant une valeur égale ou inférieure à 4, le composé de métal de transition étant choisi dans un groupe composé d'un tétrahalogénure de métal de transition, d'un alcoxyde trihalogénure de métal de transition/aryloxyde trihalogénure de métal de transition, d'un dialcoxyde dihalogénure de métal de transition, d'un trialcoxyde monohalogénure de métal de transition, d'un tétraalcoxyde de métal de transition, et de mélanges correspondants,

(a) le tétrahalogénure de métal de transition étant choisi dans un groupe composé du tétrachlorure de titane, du tétrabromure de titane et du tétraiodure de titane pour V, Zr et Hf ;
(b) l'alcoxyde trihalogénure de métal de transition/aryloxyde trihalogénure de métal de transition étant choisi dans un groupe composé du trichlorure de méthoxytitane, du trichlorure d'éthoxytitane, du trichlorure de butoxytitane et du trichlorure de phénoxytitane pour V, Zr et Hf ;
(c) le dialcoxyde dihalogénure de métal de transition étant le diéthoxyde dichlorure de métal de transition pour V, Zr et Hf ;
(d) le trialcoxyde monohalogénure de métal de transition étant le triéthoxyde chlorure de métal de transition pour V, Zr et Hf ; et
(e) le tétraalcoxyde de métal de transition étant choisi dans un groupe composé du tétrabutoxytitane et du tétraéthoxytitane pour V, Zr et Hf.

11. Procédé selon la revendication 1, le composé de métal de transition étant un composé de titane représenté par

Ti(OR)$_p$X$_{4-p}$, X étant un atome d'halogène ; R étant un groupe hydrocarboné et p étant un entier possédant une valeur égale ou inférieure à 4.

12. Procédé selon la revendication 1, le précurseur d'organomagnésium étant un précurseur d'organomagnésium séché par pulvérisation possédant une morphologie sphérique et étant préparé par, tout d'abord, mise en contact de la source de magnésium avec un organohalogénure en présence d'un agent de solvatation en tant que première étape et ensuite par ajout d'un alcool et ensuite soumis à un séchage par pulvérisation pour obtenir une morphologie sphérique du précurseur d'organomagnésium.

13. Procédé selon les revendications 1 et 12, l'agent de solvatation étant choisi dans un groupe composé du diméthyléther, du diéthyléther, du dipropyléther, du diisopropyléther, de l'éthylméthyléther, du n-butylméthyléther, du n-butyléthyléther, du di-n-butyléther, du diisobutyléther, de l'isobutylméthyléther, et de l'isobutyléthyléther, du dioxanne, du tétrahydrofuranne, du 2-méthyltétrahydrofuranne, du tétrahydropyranne et d'une combinaison correspondante.

14. Procédé selon les revendications 1 et 12, la source de magnésium étant choisie dans un groupe composé de magnésium métal, de dialkylmagnésium, d'halogénures d'alkyl/arylmagnésium et de mélanges correspondants ;

   (a) le magnésium métal se trouvant sous forme de poudre, de ruban, de copeaux, de fil, de granulés, d'un bloc, de morceaux, d'éclats;
   (b) le composé de dialkylmagnésium étant choisi dans un groupe composé du diméthylmagnésium, du diéthylmagnésium, du diisopropylmagnésium, du dibutylmagnésium, du dihexylmagnésium, du dioctylmagnésium, de l'éthylbutylmagnésium, et du butyloctylmagnésium ; et
   (c) l'halogénure d'alkyl/arylmagnésium étant choisi dans un groupe composé du chlorure de méthylmagnésium, du chlorure d'éthylmagnésium, du chlorure d'isopropylmagnésium, du chlorure d'isobutylmagnésium, du chlorure de tert-butylmagnésium, du chlorure de benzylmagnésium, du bromure de méthylmagnésium, du bromure d'éthylmagnésium, du bromure d'isopropylmagnésium, du bromure d'isobutylmagnésium, du bromure de tert-butylmagnésium, du bromure d'hexylmagnésium, du bromure de benzylmagnésium, de l'iodure de méthylmagnésium, de l'iodure d'éthylmagnésium, de l'iodure d'isopropylmagnésium, de l'iodure d'isobutylmagnésium, de l'iodure de tert-butylmagnésium, et de l'iodure de benzylmagnésium.

15. Procédé selon les revendications 1 et 12, l'organohalogénure étant choisi dans un groupe composé d'halogénures d'alkyle soit ramifiés soit linéaires, d'alkylbenzène halogéné/halogénures benzyliques possédant un radical alkyle contenant de 10 à 15 atomes de carbone et des mélanges correspondants ;

   (a) l'halogénure d'alkyle étant choisi dans un groupe composé du chlorure de méthyle, du chlorure d'éthyle, du chlorure de propyle, du chlorure d'isopropyle, du dichlorométhane, du chloroforme, du tétrachlorure de carbone, du 1,1-dichloropropane, du 1,2-dichloropropane, du 1,3-dichloropropane, du 2,3-dichloropropane, du chlorure de n-butyle, du chlorure d'iso-butyle, du 1,4-dichlorobutane, du chlorure de tert-butyle, du chlorure d'amyle, du chlorure de tert-amyle, du 2-chloropentane, du 3-chloropentane, du 1,5-dichloropentane, du 1-chloro-8-iodooctane, du 1-chloro-6-cyanohexane, du chlorure de cyclopentyle, du chlorure de cyclohexyle, du dodécane chloré, du tétradécane chloré, de l'éicosane chloré, du pentacosane chloré, du triacontane chloré, du chlorure d'iso-octyle, du 5-chloro-5-méthyldécane, du 9-chloro-9-éthyl-6-méthyléicosane ; et
   (b) l'alkylbenzène halogéné/l'halogénure benzylique étant choisi dans un groupe composé du chlorure de benzyle et du α,α'-dichloroxylène.

16. Procédé selon les revendications 1 et 12, l'alcool étant choisi dans un groupe composé des alcools aliphatiques, des alcools alicycliques, des alcools aromatiques, des alcools aliphatiques contenant un groupe alcoxy, des diols et d'un mélange correspondant ;

   (a) l'alcool aliphatique étant choisi dans un groupe composé du méthanol, de l'éthanol, du propanol, du n-butanol, de l'iso-butanol, du t-butanol, du n-pentanol, de l'iso-pentanol, du n-hexanol, du 2-méthylpentanol, du 2-éthylbutanol, du n-heptanol, du n-octanol, du 2-éthylhexanol, du décanol et du dodécanol,
   (b) l'alcools alicyclique étant choisi dans un groupe composé du cyclohexanol et du méthylcyclohexanol,
   (c) l'alcools aromatique étant choisi dans un groupe composé de l'alcool benzylique et de l'alcool méthylbenzylique,
   (d) l'alcool aliphatique contenant un groupe alcoxy étant choisi dans un groupe composé de l'éthylglycol et du butylglycol ;

(e) le diol étant choisi dans un groupe composé du catéchol, de l'éthylène glycol, du 1,3-propanediol, du 1,4-butanediol, du 1,5-pentanediol, du 1,8-octanediol, du 1,2-propanediol, du 1,2-butanediol, du 2,3-butanediol, du 1,3-butanediol, du 1,2-pentanediol, du p-menthane-3,8-diol, et du 2-méthyl-2,4-pentanediol.

17. Procédé selon la revendication 1, la composition de catalyseur sphérique étant composée d'une combinaison de 2,0 % en poids à 20 % en poids d'un donneur d'électrons interne, de 0,5 % en poids à 10,0 % en poids d'un métal de transition et de 10 % en poids à 20 % en poids d'un magnésium.

18. Procédé pour la préparation d'un système de catalyseur sphérique, ledit procédé comprenant la mise en contact de la composition de catalyseur sphérique telle qu'obtenue selon la revendication 1 avec au moins un co-catalyseur, et au moins un donneur d'électrons externe pour obtenir le système de catalyseur sphérique.

**Fig.1**

**Fig. 2a**

**Fig. 2b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 198707620 A
- WO 199311166 A
- US 5100849 A
- US 5468698 A
- US 6020279 A
- US 4469648 A
- US 6323152 B
- US 5162277 A
- US 5955396 A
- US 20090233793 A
- US 5610246 A
- EP 1609805 A
- US 5034365 A
- US 5895770 A
- US 6642325 B